# EUROPEAN PATENT APPLICATION

(11) **EP 2 345 855 A1**
(43) Date of publication of application: **20.07.2011**
(21) Application number: 10761526.2
(22) Date of filing: 03.03.2010
(51) Int. Cl.: F24F 7/08, F24F 7/007

(54) **HEAT-EXCHANGE VENTILATION DEVICE**

(30) Priority: 30.03.2009 JP 2009082188
(71) Applicant: Mitsubishi Electric Corporation, Tokyo 100-8310 (JP)
(72) Inventor: UEDA, Masahiro, Tokyo 100-8310 (JP); SUZUKI, Masanobu, Tokyo 100-8310 (JP); KOMIYAMA, Hiroto, Tokyo 112-0004 (JP)
(74) Representative: Pfenning, Meinig & Partner GbR
(86) International application number: PCT/JP2010/053469
(87) International publication number: WO 2010/116824

(57) **Abstract**

The present invention includes an air supply path 5 that is housed in a casing 2 and supplies outdoor air into a room, an exhaust path 6 that is housed in the casing and exhausts indoor air out of the room, an outdoor temperature sensor 18 that senses a temperature of outdoor air, an indoor temperature sensor 19 that senses a temperature of indoor air, a control device that controls volumes of air blow from a supply blower and an exhaust blower based on signals outputted from the outdoor temperature sensor and the indoor temperature sensor, a bypass passage 15 that is juxtaposed to an air supply passage or an exhaust passage to bypass a heat exchanger, and a damper 16 that switches between the air supply passage or the exhaust passage and a bypass passage. The control device executes control to perform a normal ventilation operation by switching the damper to the bypass passage and increase air volumes of the supply blower and the exhaust blower over air volumes in a heat-exchange ventilation operation that is performed before switching to the normal ventilation operation when a heat-exchange ventilation operation is performed, and determining that the temperature of the outdoor air is equal to or higher than a first threshold and a difference between the outdoor air temperature and the indoor air temperature is equal to or larger than a second threshold.

## Description

### Field

The present invention relates to a heat-exchange ventilation device that performs heat exchange through simultaneous supply and exhaust of air via a heat exchanger.

### Background

Conventionally, there is a ventilation device with a heat exchanger that includes a box body having a pair of a suction port and a blowoff port arranged on each of an indoor side and an outdoor side, an air supply path and an exhaust path leading from the indoor side to the outdoor side to intersect with each other within the box body, blowers that are arranged on the air supply path and the exhaust path to form a supply air flow and an exhaust air flow, a heat exchanger that is arranged at the intersection to exchange heat between the supply air flow and the exhaust air flow, a bypass passage that is juxtaposed to the exhaust path to bypass the heat exchanger, a bypass damper that opens or closes the bypass passage, and an air-path switching damper that is arranged on a side wall of the exhaust passage, and the ventilation device changes directions of suction and blowoff of the blowers by using the bypass damper and the air-path switching damper (see, for example, Patent Literature 1).

There is also a heat-exchange ventilation device that is housed in a casing, and includes an air supply path that suctions outdoor air from an outdoor suction port by using a supply blower and supplies the air into a room from an indoor blowoff port through an air supply passage of a heat exchanger, and an exhaust path that suctions indoor air from an indoor suction port by using an exhaust blower and exhausts air out of the room from an outdoor blowoff port through an exhaust passage of the heat exchanger. The eat-exchange ventilation device includes an outdoor temperature sensor and an outdoor humidity sensor that are arranged on the outdoor suction port to sense a temperature and a humidity of outdoor air and output temperature and humidity signals, respectively, and an indoor temperature sensor and an indoor humidity sensor that are arranged on the indoor suction port to sense a temperature and a humidity of indoor air and output temperature and humidity signals, respectively, and controls volumes of air blow from the supply blower and the exhaust blower based on the signals outputted from the outdoor and indoor temperature sensors and the outdoor and indoor humidity sensors (see, for example, Patent Literature 2).

### Citation List

### Patent Literature

Patent Literature 1: Japanese Patent Application Laid-open No. H01-318841
Patent Literature 2: Japanese Patent Application Laid-open No. 2008-309381

### Summary

### Technical Problem

According to the conventional technique described in Patent Literature 1, it is possible to supply external air directly by a bypass operation without heat exchange or increase a volume of supply air by air path switching. However, the switching is performed manually and thus it is impossible to sufficiently address changes in indoor or outdoor temperatures each time. While the volume of supply air can be increased by the air path switching, a balance between the supply air and the exhaust air is lost because air is not exhausted, and effective ventilation cannot be achieved practically without another exhaust port.

Further, according to the conventional technique described in Patent Literature 2, it is necessary to arrange the humidity sensors on the outdoor suction port and the indoor suction port, which increases costs and complicates a control circuit. In addition, because the control of the air volume is executed for dehumidification, cooling using external air that cools inside of a room by using outdoor air, which is performed in cases where an outdoor temperature is lower than an indoor temperature in summer and the like, cannot be performed.

The present invention has been achieved in view of the above problems, and an object of the present invention is to provide a heat-exchange ventilation device with a simple configuration that can obtain a cooling effect in a short time by automatically introducing a large volume of outdoor air when an outdoor temperature is low. Solution to Problem

To solve the above problems and achieve an object, a heat-exchange ventilation device according to the present invention includes: an air supply path that is housed in a casing, suctions outdoor air from an outdoor suction port by using a supply blower, and supplies air into a room from an indoor blowoff port through an air supply passage of a heat exchanger; an exhaust path that is housed in the casing, suctions indoor air from an indoor suction port by using an exhaust blower, and exhausts air out of the room from an outdoor blowoff port through an exhaust passage of the heat exchanger; an outdoor temperature sensor that senses a temperature of outdoor air and outputs a temperature signal; an indoor temperature sensor that senses a temperature of indoor air and outputs a temperature signal; a control device that controls volumes of air blown by the supply blower and the exhaust blower based on the signals outputted from the outdoor temperature sensor and the indoor temperature sensor; a bypass passage that is juxtaposed to the air supply passage or the exhaust passage and bypasses the heat exchanger; and a damper that switches between the air supply passage or the exhaust passage and the bypass passage, wherein when a heat-exchange ventilation operation in which the damper opens the air supply passage or the exhaust passage is performed, and determining that the temperature of the outdoor air is equal to or higher than a first threshold and that a difference between the temperature of the outdoor air and the temperature of the indoor air is equal to or higher than a second threshold, the control device executes control to perform a normal ventilation operation by switching the damper to the bypass passage, and to increase air volumes of the supply blower and the exhaust blower over air volumes in a heat-exchange ventilation operation that is performed before switching to the normal ventilation operation.

### Advantageous Effects of Invention

According to the present invention, automatic switching is performed between a heat-exchange ventilation operation and a normal ventilation operation in which a heat exchanger is bypassed not to perform heat exchange in accordance with temperature states of an outdoor temperature and an indoor temperature. Thus, ventilation with an energy saving effect according to the temperature states can be realized and power consumption of an air-conditioning device and the like can be reduced. Also by automatically temporarily increasing volumes of ventilation air when automatically switching to the normal ventilation, external air can be rapidly brought into a room to effectively cool inside of the room, and by bringing the volumes of ventilation air once increased back to the original air volumes in the middle, a heat-exchange ventilation device that realizes comfort also taking noise into consideration can be obtained.

### Brief Description of Drawings

FIG. 1 is a transparent perspective view of a first embodiment of a heat-exchange ventilation device according to the present invention.
FIG. 2 is a transparent plan view of the heat-exchange ventilation device according to the first embodiment.
FIG. 3 is a transparent side view of the heat-exchange ventilation device according to the first embodiment.
FIG. 4 is a block diagram of a control device for blowers according to the first embodiment.
FIG. 5 is a flowchart of behaviors in an automatic normal ventilation operation in the first embodiment. Description of Embodiments

Exemplary embodiment of a heat-exchange ventilation device according to the present invention will be explained below in detail with reference to the accompanying drawings. The present invention is not limited thereto.

### First Embodiment

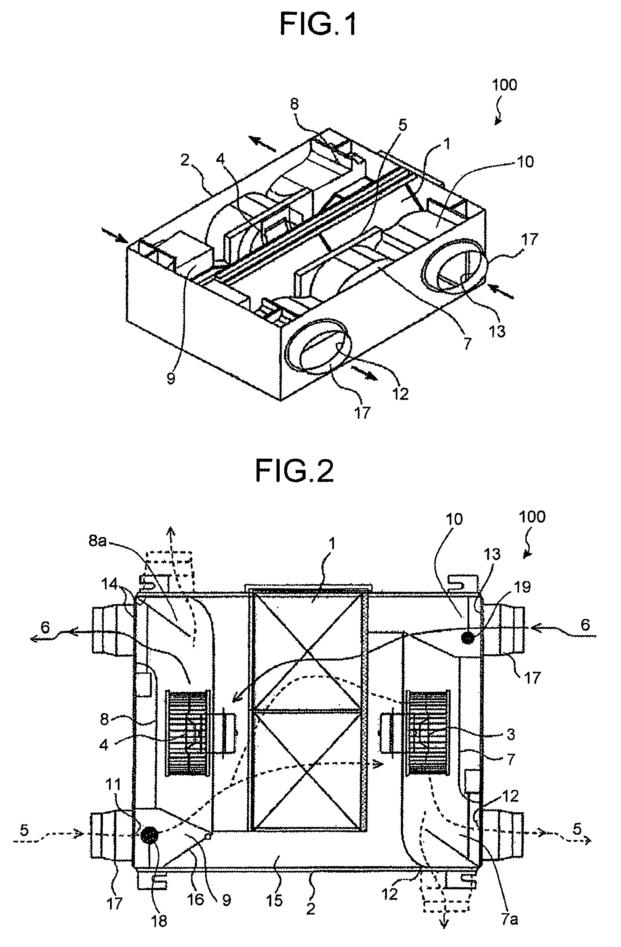

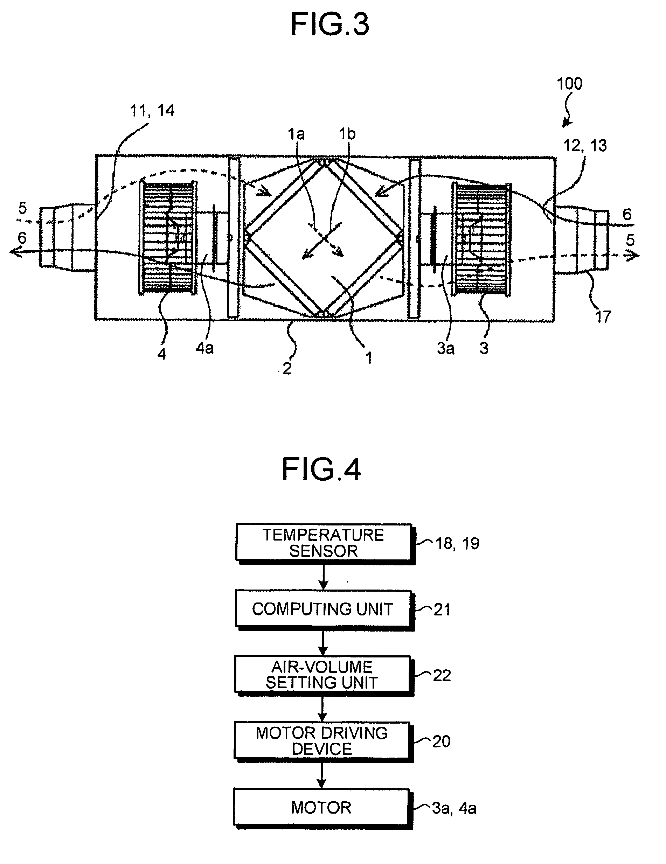

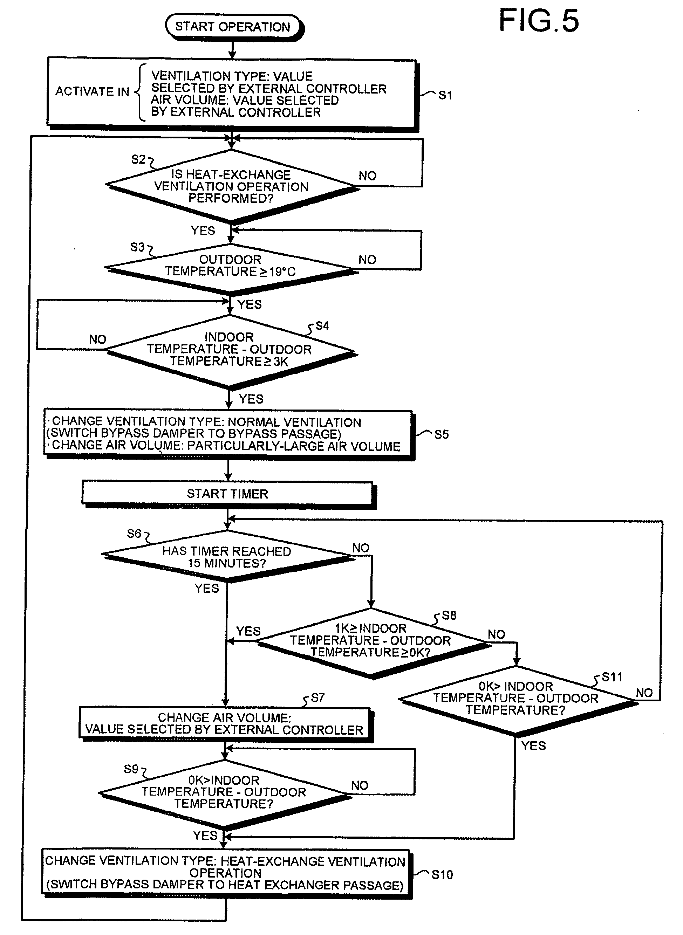

FIG. 1 is a transparent perspective view of a first embodiment of a heat-exchange ventilation device according to the present invention, FIG. 2 is a transparent plan view, FIG. 3 is a transparent side view, FIG. 4 is a block diagram of a control device for blowers, and FIG. 5 is a flowchart of behaviors in an automatic normal ventilation operation. As shown in FIGS. 1 to 3, a heat-exchange ventilation device 100 includes a heat exchanger 1, which performs heat exchange between outdoor air and indoor air, installed in a body casing 2 formed in the shape of a rectangular solid box, and that performs room ventilation while performing heat exchange through simultaneous supply and exhaust of air.

In the body casing 2, an air supply path 5 that suctions outdoor air from an outdoor suction port 11 by using a supply blower 3 and supplies air into a room from an indoor blowoff port 12 through an air supply passage 1a (see FIG. 3) of the heat exchanger 1, and an exhaust path 6 that suctions indoor air from an indoor suction port 13 by using an exhaust blower 4 and exhausts air out of the room from an outdoor blowoff port 14 through an exhaust passage 1b (see FIG. 3) of the heat exchanger 1 are formed.

The heat exchanger 1, the supply blower 3, and the exhaust blower 4 are installed in the body casing 2, and an air-supply path component 7, an exhaust path component 8, an air-supply inlet component 9, and an exhaust inlet component 10 are attached thereto, thereby forming the air supply path 5 and the exhaust path 6.

The air supply path 5 is formed as a ventilation path that has an opening of the body casing 2 corresponding to the air-supply inlet component 9 as the outdoor suction port 11. The air supply path 5 leads from the air-supply inlet component 9 to an outlet portion 7a of the air-supply path component 7 passing through an upper surface of the heat exchanger 1, then the air supply passage 1a of the heat exchanger 1, and the supply blower 3. The air supply path 5 also has an opening of the body casing 2 corresponding to an opening of the outlet portion 7a as the indoor blowoff port 12.

The exhaust path 6 is formed as a ventilation path that has an opening of the body casing 2 corresponding to the exhaust inlet component 10 as the indoor suction port 13. The exhaust path 6 leads from the exhaust inlet component 10 to an outlet portion 8a of the exhaust path component 8 passing through the upper surface of the heat exchanger 1, then the exhaust passage 1b of the heat exchanger 1, and the exhaust blower 4. The exhaust path 6 also has an opening of the body casing 2 corresponding to an opening of the outlet portion 8a as the outdoor blowoff port 14.

Further, a bypass passage 15 is formed by closing the air supply path 5 using a bypass damper 16 upstream of the heat exchanger 1 of the air supply path 5 to open the bypass passage 15, as a ventilation path. That supplies outdoor air from the outdoor suction port 11 of the air supply path 5, passes through the air-supply inlet component 9, bypasses the heat exchanger 1 and passes through the bypass passage 15, thereby supplying the outdoor air from the outlet portion 7a of the air-supply path component 7 to the indoor blowoff port 12.

On outer side surfaces of the body casing 2, duct connecting tubes 17 are attached to the outdoor suction port 11 and the indoor blowoff port 12 of the air supply path 5 and the indoor suction port 13 and the outdoor blowoff port of the exhaust path 6.

The heat-exchange ventilation device 100 configured as described above can supply outdoor air into a room via the heat exchanger 1 through the air supply path 5, and simultaneously exhaust indoor air out of the room via the heat exchanger 1 through the exhaust path 6. Accordingly, the heat-exchange ventilation device 100 can perform a heat-exchange ventilation operation through simultaneous supply and exhaust of air while the heat exchanger 1 performs heat exchange between supply air and exhaust air.

Further, by switching to the bypass passage 15 using the bypass damper 16, the heat-exchange ventilation device 100 also can supply the outdoor air into the room using the supply blower 3 without causing the outdoor air passing through the heat exchanger 1. Accordingly, the heat-exchange ventilation device 100 can perform a normal ventilation operation without heat exchange.

In the body casing 2, an outdoor temperature sensor 18 that senses a temperature of outdoor air is arranged at the outdoor suction port 11, and an indoor temperature sensor 19 that senses a temperature of indoor air is arranged at the indoor suction port 13. The outdoor temperature sensor 18 senses the temperature of the outdoor air and outputs a temperature signal to a control device. The indoor temperature sensor 19 senses the temperature of the indoor air and outputs to the control device.

An overview of control is explained. The heat-exchange ventilation device 100 can arbitrarily select a volume of ventilation air and a type of ventilation (the heat-exchange ventilation operation or the normal ventilation operation bypassing the heat exchanger) through an external controller (not shown). A case where the heat-exchange ventilation operation is selected by the external controller (not shown) is explained below.

The control device includes a computing unit 21, an air-volume setting unit 22, and a motor driving device 20. As shown in the block diagram of FIG. 4, when an operation of the heat-exchange ventilation device 100 is started, the air-volume setting unit 22 causes the motor driving device 20 to activate motors 3a and 4a of the blowers 3 and 4 based on the type of ventilation selected by the external controller (not shown) and a signal of the air volume selected by the external controller (not shown). When the ventilation type indicates the heat-exchange ventilation operation, the computing unit 21 computes a difference in temperatures between outdoor air and indoor air based on the temperature signals outputted from the outdoor temperature sensor 18 and the indoor temperature sensor 19.

The computing unit 21 outputs a computing result of the temperature difference between the outdoor air and the indoor air to the air-volume setting unit 22. Depending on temperature differences between the outdoor air and the indoor air outputted and some temperatures of the outdoor air, the air-volume setting unit 22 ignores the ventilation type and the air volume selected by the external controller (not shown), and automatically performs switching of the bypass damper 16 and outputting of an air volume signal in order to automatically change the air volume of the blowers 3 and 4 by the motor driving device 20.

Details of the control of the automatic normal ventilation operation are explained with reference to the flowchart of FIG. 5. When the operation of the heat-exchange ventilation device 100 is started, a ventilation operation in the ventilation type and the air volume based on the air volume signal selected by the external controller (not shown) is performed at Step S1. At Step S2, it is determined whether the ventilation type indicates the heat-exchange ventilation operation. When the ventilation type indicates the heat-exchange ventilation operation, the control proceeds to Step S3 and when the ventilation type indicates the normal ventilation operation, the control returns to the determination at Step S2. At Step S3, it is determined whether an outdoor air temperature T1 sensed by the outdoor temperature sensor 18 is equal to or higher than a threshold (a first threshold) set by assuming summer, whether T1≥19°C is satisfied, for example.

When T1≥19°C is satisfied, the control proceeds to Step S4. The outdoor air temperature T1 and an indoor air temperature T2 sensed by the indoor temperature sensor 19 are then compared with each other to determine whether a temperature difference ΔT obtained by T2-T1 is equal to or higher than a set threshold (a second threshold), whether ΔT≥3K is satisfied, for example. When ΔT≥3K is satisfied, the control proceeds to Step S5. For the purpose of bringing the outdoor air that is cooler than the indoor temperature directly into a room without performing heat exchange to obtain a cooling effect, the bypass damper 16 on the air supply side is activated. Then, the air path is switched to the bypass passage 15 to bypass the heat exchanger 1, thereby switching from the heat-exchange ventilation operation to the normal ventilation operation without heat exchange. Also, to rapidly lower the indoor temperature irrespective of the air volume signal from the external controller, the air-volume setting unit 22 is caused to output a signal, which is larger than a maximum air volume selectable in the heat-exchange ventilation operation, indicating a particularly-large air volume dedicated to the normal ventilation operation, the blowers 3 and 4 are forced to operate in the particularly-large volume of air blow based on this signal, and at the same time a timer (not shown) is started.

By executing this control, outdoor air which is kept cool without being subjected to heat exchange can be brought into the room, and hot indoor air can be ejected out of the room as it is, which automatically enables cooling by utilizing an external temperature. By forcibly making the volume of ventilation air the maximum air volume, the indoor temperature can be lowered in a short time and loads on an air-conditioning device for cooling can be reduced, thereby saving energy.

At Step S6, it is determined whether the timer (not shown) that measures an elapsed time from the start of the normal ventilation operation has reached a set threshold time, such as 15 minutes. When 15 minutes has passed, the control proceeds to Step S7. The air-volume setting unit 22 cancels the volume of air blow that is increased at the start of the normal ventilation operation. Furthermore, the air-volume setting unit 22 outputs an air volume signal to the motor driving device 20 based on the air volume signal selected by the external controller (not shown), which indicates the air volume before the increase, in order to execute control for bringing the volume of air blow of the blowers 3 and 4 back to the volume of air blow in the heat-exchange ventilation operation.

By executing this control, with respect to increase in operation noise due to the increase in the volume of air blow, it is possible to limit the time when the noise is large only to a certain period by limiting the time when the volume of air blow is increased within the threshold time. Accordingly, at the start of the normal ventilation operation when the outdoor temperature is greatly lower than the indoor temperature, the air volume can be increased to effectively lower the indoor temperature in a short time. Furthermore, after the indoor temperature has been lowered to some extent, the volume of air blow can be brought back to the original volume to give priority to reduction in the noise. In this way, a balance between effective cooling by using external air and a pleasant operation sound can be also achieved.

Further, when the timer has a value less than 15 minutes as the threshold at Step S6, the control proceeds to Step S8 to determine whether the temperature difference ΔT between the outdoor air temperature T1 and the indoor air temperature T2 falls within a set threshold range, whether 0k≤ΔT≤1K is satisfied, for example. When 0k≤ΔT≤1K is satisfied, the control proceeds to Step S7 like in the above. By executing this control, the air blow volume is automatically brought back to the original volume with a small operation sound when the cooling is completed rapidly in a short time, and therefore the balance between the cooling by using external air and the pleasant operation sound can be achieved.

At Step S9, it is determined whether the temperature difference ΔT is lower than a set threshold (a fourth threshold), whether ΔT<0K is satisfied, for example. When ΔT<0K is satisfied, the control proceeds to Step S10 to activate the bypass damper 16 on the supply side again in order to switch from the bypass passage 15 to the air supply passage 1a of the heat exchanger 1. Thus, switching from the normal ventilation operation in which heat exchange is not performed to the heat-exchange ventilation operation is executed to automatically return to the heat-exchange ventilation operation. The control then returns to Step S2. The control may be configured to proceed to Step S10 when ΔT is equal to or smaller than the threshold, that is, when ΔT≤0 is satisfied at Step S9.

When 0K≤ΔT≤1K is not satisfied at Step S8, the control proceeds to Step S11 to determine whether the temperature difference ΔT is smaller than the set threshold (the third threshold), whether ΔT<0K is satisfied, for example. The control proceeds to Step S10 when ΔT<0K is satisfied, and returns to Step S6 when ΔT<0K is not satisfied. The control can be configured to proceed to Step S10 when ΔT is equal to or smaller than the threshold, that is, when ΔT≤0 is satisfied at Step S11. In this case, the control needs to be configured to proceed to Step S11 when 0K<T≤1K is not satisfied at Step S8.

The operation above mentioned can realize most appropriate energy-saving ventilation that can reduce the loads of the air-conditioning device according to situations of the outdoor/indoor temperatures by automatically switching between the normal ventilation operation and the heat-exchange ventilation operation. By automatically controlling the air volume, rapid cooling of a room can be achieved and ventilation considering operation noise can be realized according to the temperature situations.

Once the control returns to the heat-exchange ventilation operation, the normal ventilation operation is not automatically started until ΔT≥3K is satisfied. Therefore, when the temperature difference between the outdoor air and the indoor air fluctuates near 0K, frequent occurrence of switching between the heat-exchange ventilation operation and the normal ventilation operation can be suppressed.

When the air-conditioning device (not shown) and the heat-exchange ventilation device are arranged and operated together, a detecting device (detecting unit) that detects an operation (cooling or the like) signal from the air-conditioning device can be provided in the control device of the heat-exchange ventilation device so that the cooling signal from the air-conditioning device can be used instead of the outdoor temperature, which is sensed by the outdoor temperature sensor 18 at Step S3. This configuration enables to determine that it is summer when a use state of the air-conditioning device indicates a cooling operation, and cooling by utilizing an external temperature by the normal ventilation operation can be performed automatically in the same manner as described above. In this case, when the air-conditioning device (not shown) performs the cooling operation, the normal ventilation operation can be performed when the outdoor air temperature is lower than the indoor air temperature regardless of an absolute value of the outdoor air temperature. Accordingly, cooling by utilizing the external air temperature by the normal ventilation operation can be performed also in rooms where there are office automation apparatuses or the like and a cooling operation is required even in seasons other than the summer season, in which the outdoor temperature T1 satisfies T1<19°C. Therefore, the loads on the air-conditioning device that performs cooling regardless of the seasons can be lowered and energy saving can be achieved.

While the air-volume setting unit 22 is caused to output a signal of a high-notch air volume to provide the largest air volume when ΔT≥3K is satisfied at Step S4, it is also possible to output an air volume signal that provides an air volume 1.2 to 1.5 times larger than the air volume selected by the external controller, instead of the high-notch air volume. In this case, a longer time is required until the indoor temperature becomes low than in the case where the ventilation with the largest air volume is performed. However, because noise can be suppressed as compared to the case of the largest air volume, a balance with silence can be achieved.

Because the supply air and the exhaust air flows through the air supply passage 1a and the exhaust passage 1b of the heat exchanger 1, respectively, the heat exchange between the air on the supply side and the air on the exhaust side is achieved. Accordingly when the air on the supply side passes through the bypass passage 15 without passing through the air supply passage 1a, heat exchange with the exhaust air passing through the exhaust passage 1b is not performed. Therefore, both the supply air and the exhaust air functions as normal ventilation air not subjected to the heat exchange. While the example in which the bypass passage 15 is provided on the side of the air supply path 5 is shown, it is also possible to provide a bypass passage on the side of the exhaust path 6. Then, indoor air can be exhausted to the outdoor blowoff port 14 through the outlet portion 8a of the exhaust path component 8 from the indoor suction port 13 of the exhaust path 6 via the exhaust inlet component 10, when switched to the bypass passage using the bypass damper to cause the indoor air to bypass the heat exchanger 1.

The device is controlled so that, in any operation state at a step shown in FIG. 5, the operation at the step is immediately stopped when the selection of the ventilation type (the heat-exchange ventilation operation or the normal ventilation operation bypassing the heat exchanger) or the volume of ventilation air performed by the external controller (not shown) changes, and then the operation is performed in a ventilation type or a ventilation air volume selected by the external controller.

The thresholds for T1 and ΔT as references for the controls are previously stored in a storage unit (not shown). The thresholds for T1 and ΔT can be configured to be properly changed according to usage environments of the heat-exchange ventilation device 100 or the like.

### Industrial Applicability

As described above, the heat-exchange ventilation device according to the present invention is useful for a ventilation device that performs indoor cooling by utilizing external air according to outdoor temperatures. Reference Signs List

- 1: HEAT EXCHANGER
- 1a: AIR SUPPLY PASSAGE
- 1b: EXHAUST PASSAGE
- 2: BODY CASING
- 3: SUPPLY BLOWER
- 4: EXHAUST BLOWER
- 3a: MOTOR
- 4a: MOTOR
- 5: AIR SUPPLY PATH
- 6: EXHAUST PATH
- 7: AIR-SUPPLY PATH COMPONENT
- 8: EXHAUST PATH COMPONENT
- 7a: OUTLET PORTION
- 8a: OUTLET PORTION
- 9: AIR-SUPPLY INLET COMPONENT
- 10: EXHAUST INLET COMPONENT
- 11: OUTDOOR SUCTION PORT
- 12: INDOOR BLOWOFF PORT
- 13: INDOOR SUCTION PORT
- 14: OUTDOOR BLOWOFF PORT
- 15: BYPASS PASSAGE
- 16: BYPASS DAMPER
- 17: DUCT CONNECTING TUBE
- 18: OUTDOOR TEMPERATURE SENSOR
- 19: INDOOR TEMPERATURE SENSOR
- 20: MOTOR DRIVING DEVICE
- 21: COMPUTING UNIT
- 22: AIR-VOLUME SETTING UNIT
- 100: HEAT-EXCHANGE VENTILATION DEVICE

## Claims

1. A heat-exchange ventilation device comprising:
an air supply path that is housed in a casing, suctions outdoor air from an outdoor suction port by using a supply blower, and supplies air into a room from an indoor blowoff port through an air supply passage of a heat exchanger;
an exhaust path that is housed in the casing, suctions indoor air from an indoor suction port by using an exhaust blower, and exhausts air out of the room from an outdoor blowoff port through an exhaust passage of the heat exchanger;
an outdoor temperature sensor that senses a temperature of outdoor air and outputs a temperature signal;
an indoor temperature sensor that senses a temperature of indoor air and outputs a temperature signal;
a control device that controls volumes of air blown by the supply blower and the exhaust blower based on the signals outputted from the outdoor temperature sensor and the indoor temperature sensor;
a bypass passage that is juxtaposed to the air supply passage or the exhaust passage and bypasses the heat exchanger; and
a damper that switches between the air supply passage or the exhaust passage and the bypass passage, wherein
when a heat-exchange ventilation operation in which the damper opens the air supply passage or the exhaust passage is performed, and determining that the temperature of the outdoor air is equal to or higher than a first threshold and that a difference between the temperature of the outdoor air and the temperature of the indoor air is equal to or higher than a second threshold, the control device executes control to perform a normal ventilation operation by switching the damper to the bypass passage, and to increase air volumes of the supply blower and the exhaust blower over air volumes in a heat-exchange ventilation operation that is performed before switching to the normal ventilation operation.

2. The heat-exchange ventilation device according to claim 1, wherein
the outdoor temperature sensor is installed at the outdoor suction port, and
the indoor temperature sensor is installed at the indoor suction port.

3. The heat-exchange ventilation device according to claim 1, wherein
the control device includes a detecting unit that detects an operation state of an air-conditioning device, and
when the detecting unit detects a signal of a cooling operation of the air-conditioning device and determines that a temperature of outdoor air is lower than a temperature of indoor air, the control device executes control to perform a normal ventilation operation by switching the damper to the bypass passage, and to increase air volumes of the supply blower and the exhaust blower over air volumes in the heat-exchange ventilation operation that is performed before switching to the normal ventilation operation.

4. The heat-exchange ventilation device according to claim 1, wherein
the control device
executes control of the normal ventilation operation in which the damper is switched to the bypass passage, and
executes control to bring air volumes of the supply blower and the exhaust blower back to air volumes in the heat-exchange ventilation operation that is performed before switching to the normal ventilation operation when a certain time period passes after the air volumes of the supply blower and the exhaust blower are increased.

5. The heat-exchange ventilation device according to claim 1, wherein
the control device
executes control of the normal ventilation operation in which the damper is switched to the bypass passage, and
executes control to bring air volumes of the supply blower and the exhaust blower back to air volumes in the heat-exchange ventilation operation that is performed before switching to the normal ventilation operation when determining that a temperature difference between the outdoor air temperature sensed by the outdoor temperature sensor and the indoor air temperature sensed by the indoor temperature sensor is equal to or lower than a third threshold after the air volumes of the supply blower and the exhaust blower are increased.

6. The heat-exchange ventilation device according to claim 1, wherein
the control device
executes control of the normal ventilation operation in which the damper is switched to the bypass passage, and
executes control to return to the heat-exchange operation by switching the damper from the bypass passage to the air supply passage or the exhaust passage of the heat exchanger when determining that a temperature difference between the outdoor air temperature sensed by the outdoor temperature sensor and the indoor air temperature sensed by the indoor temperature sensor is equal to or lower than a fourth threshold after air volumes of the supply blower and the exhaust blower are increased.
